# EUROPEAN PATENT SPECIFICATION

(11) **EP 3 586 146 B1**
(45) Date of publication and mention of the grant of the patent: **22.03.2023**
(21) Application number: 18703029.1
(22) Date of filing: 09.02.2018
(51) Int. Cl.: G01N 35/00

(54) **A SAMPLE CONTAINER PROCESSING SYSTEM**
PROBENBEHÄLTERVERARBEITUNGSSYSTEM
SYSTÈME DE TRAITEMENT DE RÉCIPIENT D'ÉCHANTILLON

(30) Priority: 23.02.2017 EP 17157733
(43) Date of publication of application: 01.01.2020
(73) Proprietor: Roche Diagnostics GmbH, 68305 Mannheim (DE); F. Hoffmann-La Roche AG, 4070 Basel (CH)
(72) Inventor: METZGER, Jean-Claude, 8142 Uitikon (CH); MEYER, Thomas, 6318 Walchwil (CH)
(74) Representative: Patentanwälte Ruff, Wilhelm, Beier, Dauster & Partner mbB
(86) International application number: PCT/EP2018/053273
(87) International publication number: WO 2018/153691

(56) References cited:
- WO-A1-2011/017586
- WO-A1-2014/131810
- CN-A- 104 959 992
- US-A1- 2009 108 605
- US-A1- 2010 066 109
- US-A1- 2012 286 535
- US-A1- 2012 299 322
- US-B2- 9 120 233

## Description

### Applicable field and prior art

The invention relates to a sample container processing system.

Sample container processing systems can typically be employed in laboratory automation systems, in which a plurality of sample containers are to be handled. Typically, each sample container comprises a sample to be analyzed by a number of laboratory stations. A typical laboratory automation system comprising a laboratory sample distribution system is shown in document WO 2013/064656 A1.

Gripping devices are typically used in sample container processing systems in order to handle sample containers, for example for loading and unloading the sample containers to and from sample container carriers and to and from laboratory stations.

In addition, sample containers can be stored in storage racks. In order to reduce space needed by such storage racks, storage racks are typically embodied in order to store sample containers with a high density.

Sample containers, which can be embodied as tubes, are typically labelled with labels containing information, for example regarding the type of sample contained in the sample container and/or analytical operations to be performed with the sample. It has been found that labels tend to at least partially peel off. Thus, in high-density storage racks a gripping device may not have enough space to grip a desired sample container without getting into contact with peeled off labels from neighboring sample containers. The peeled off labels may then stick to surfaces of gripping devices. This can lead to a malfunction of the system.

WO 2014/131810 A1 and CN 104 959 992 A respectively disclose a gripping apparatus having non-rigid fingers.

US 2010/0066109 A1 discloses a container gripper comprising a main frame and movable supporting members for gripper fingers being movable between an open position and a closed position.

US 2012/0286535 A1 discloses a robot hand including a palm section provided between a plurality of finger sections.

WO 2011/017586 A1 discloses a gripper apparatus having a number of gripping fingers.

US 2012/299322 A1, US 2009/108605 A1 and US 9 120 233 B2 respectively disclose a gripping device, wherein the gripping device comprises: a number of rigid fingers being adapted to collectively grip an object, wherein each finger comprises a gripping surface being adapted to contact the object while the object is gripped by the gripping device, and wherein each finger comprises a non-gripping surface being different from the gripping surface, and wherein the non-gripping surface of at least one of the fingers is at least partially corrugated by a succession of grooves and serrations.

### Object and solution

It is thus an object of the invention to provide for a sample container processing system comprising a gripping device that reduces the likelihood of adhesion of labels.

The object is solved by a sample container processing system according to claim 1.

The invention relates to a sample container processing system comprising a gripping device for handling sample containers, wherein labels are adhered to the sample containers. This is a typical situation of handling sample containers, wherein the labels are typically adhered by specific adhesives on one side of the label, while the other side of the label is not provided with adhesives and typically contains visible information.

The gripping device comprises a number (e.g. 2 to 8, in particular 4) of fingers being adapted to collectively grip a sample container. The fingers may also be adapted to collectively release the sample container. This allows for gripping or holding and also for releasing a sample container, wherein the sample container will typically be gripped when it should be manipulated by the gripping device.

Each finger comprises a gripping surface being adapted to contact the sample container while the sample container is gripped by the gripping device. Each finger comprises a non-gripping surface being different from the gripping surface.

The non-gripping surface of at least one of the fingers is at least partially structured to reduce a protruding contact area of the non-gripping surface. By means of the structured non-gripping surface having a reduced protruding contact area the likelihood of adhesion of a label to the non-gripping surface of a finger can be reduced, since the protruding contact area forming the resulting contact area to a label is reduced, thus reducing the adhering force accordingly. Consequently, adhesion of labels of sample containers being placed adjacent to the gripped sample container, for example being placed in a rack having a high storage density, to the finger can be minimized in order to prevent malfunction of a system.

A respective finger is embodied as a rigid finger. The rigid finger may bend in a negligible manner, when a sample container is gripped by the gripping device. In particular, the bending or beam deflection of the rigid finger is less than 0,5 mm when a sample container is gripped by the gripping device. The rigid finger may be designed such that e.g. a force having a value of 10 Newton applied to the rigid finger results in a bending or beam deflection of the rigid finger less than 0,5 mm. A value of a bending stiffness of the rigid finger may be larger than 1 000 000 Newton * mm².

The gripping device may comprise a manipulating head being adapted to move the fingers during a gripping or release operation. The manipulating head may be adapted to move the fingers only laterally, i.e. without any rotatory component. The manipulating head may be adapted to move the fingers from a gripping position to a release position and vice versa without bending the fingers.

The non-gripping surfaces of all fingers may be partially structured of fully structured. The non-gripping surfaces of all fingers may be partially corrugated or fully corrugated.

The gripping device may comprise a number (e.g. 2 to 4) of finger supports, wherein two fingers are coupled to a corresponding finger support. The finger support and the fingers may be embodied as one piece.

The finger supports may be movable relative to each other. This allows for gripping and releasing operation by the fingers.

According to an embodiment, all gripping surfaces of the fingers face towards a common center. Typically a sample container may be gripped and held in this common center.

According to an embodiment, some or all of the gripping surfaces of the fingers are sand blasted. This allows for increased gripping action towards the sample container.

The corrugated surfaces of the fingers are embodied by a succession of grooves and serrations. The groves and/or serrations may extend longitudinally and/or transversely.

The grooves and/or serrations may comprise a groove width in the range of 0,5 mm to 5 mm. In particular the groove width is 1,4 mm. A groove distance between adjacent grooves may be in the range of 0,6 mm to 5,5 mm. In particular the groove distance is 1,5 mm. A length of the grooves and/or serrations may be in the range of 10 mm to 50 mm, in particular in the range of 10 mm to 20 mm. A thickness of the finger may be in the range of 1 mm to 8 mm, in particular may be 4 mm. A width of the finger may be in the range of 1 mm to 8 mm, in particular may be 3 mm. A length of the finger may be in the range of 25 mm to 75 mm, in particular in the range of 30 mm to 60 mm. The gripping surface of a finger may lie in the range of 20 mm² to 80 mm², in particular in the range of 40 mm² to 60 mm².

The sample container processing system comprises a number (e.g. 1 to 1000) of racks for holding a plurality of sample containers, wherein labels are attached to the sample containers.

The rack may be used in order to hold and store sample containers. The rack can also be a rack for transporting the sample containers or for feeding the sample containers into a laboratory station or a storing device like a refrigerator. With regard to the gripping device, all embodiments and variations as discussed herein can be applied.

It should be noted that the sample containers can be regarded as part of the sample container processing system, or can alternatively be regarded as separate entities.

According to an embodiment, the racks comprise a plurality (e.g. 30 to 100) of supports for the sample containers. The supports may be arranged in a pattern, for example in a regular pattern, having a distance between respective centers of the supports between 1.5 cm and 2.5 cm. The distance may be 2 cm. Such dimensions have been proven suitable for typical applications, as they provide for densely packed sample containers. It has also been observed that with such dimensions adhesion of labels to fingers of gripping devices has an increased likelihood, which can be reduced significantly by the gripping device according to the invention.

### Brief description of the drawing

The invention will now be described in detail with respect to the drawings, wherein
fig. 1 shows a sample container processing system,
fig. 2 shows two fingers of the sample container processing system,
fig. 3 shows a top sectional view on a rack of the sample container processing system,
fig. 4 shows a top sectional view on the rack in another state, and
fig. 5 shows the sample container processing system in a perspective view.

### Detailed description of the embodiment

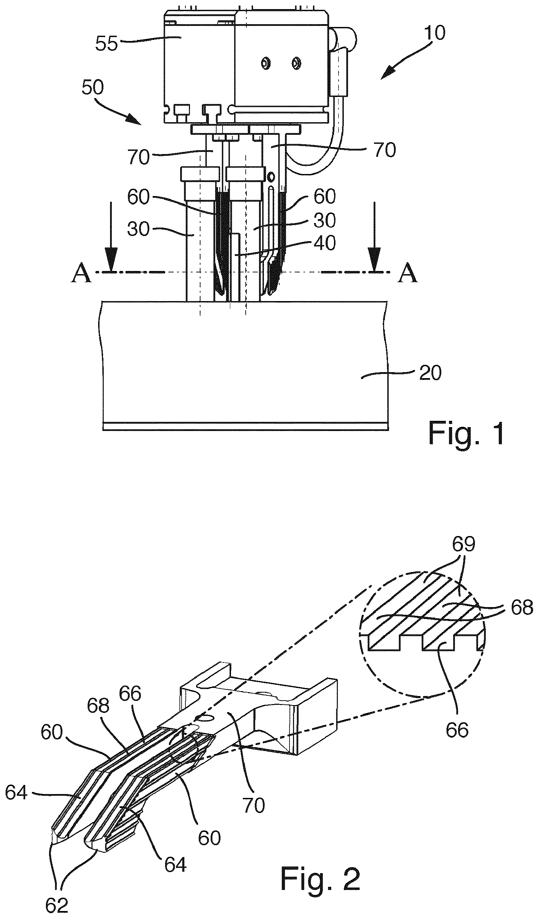

Fig. 1 shows a sample container processing system 10.

The sample container processing system 10 comprises a rack 20. The rack 20 is adapted to hold a plurality of sample containers 30. The sample containers 30 are embodied as typical laboratory tubes.

On some or all of the sample containers 30 a respective label 40 is adhered to. Such labels are used to provide information, for example regarding the type, origin and/or intended processing steps of a sample contained in the respective sample container 30.

The sample container processing system 10 further comprises a gripping device 50. The gripping device 50 comprises a conventional manipulating head 55, below which altogether four fingers 60 are attached to. Each finger 60 is embodied as a rigid finger. Regarding the manipulating head 55 reference is made to the relevant technical literature.

The fingers 60 are grouped in two groups each comprising two fingers 60, each group of fingers being connected to a respective finger support 70. The configuration of the fingers 60 will be explained further below.

The manipulating head 55 is adapted to move the fingers 60 such that they collectively hold or release a sample container 30. The fingers 60 will be further explained with respect to fig. 2.

Fig. 2 shows a group of two fingers 60 which are grouped together by the finger support 70. The finger support 70 is attached to the manipulating head 55.

Each finger 60 comprises a respective sand blasted gripping surface 62 and a respective non-gripping surface 64. The non-gripping surface 64 may be the surface of the finger 60 except/without the gripping surface 62 or may e.g. be a surface of the finger 60 not being in contact with the sample container 30.

The gripping surfaces 62 are adapted to contact a respective sample container 30 when the sample container 30 is gripped or held.

The non-gripping surfaces 64 are partially corrugated with a succession of grooves 66 and serrations 68.

As depicted in fig. 2 in the schematically detailed enlargement on the right side, a protruding contact area 69 of the non-gripping surface 64 is formed by the abutting surfaces of the serrations 68. With this measure, the non-gripping surfaces 64 are structured to reduce their protruding contact areas 69 forming contact areas to labels 40. This reduces adhesion between the non-gripping surfaces 64 and labels 40.

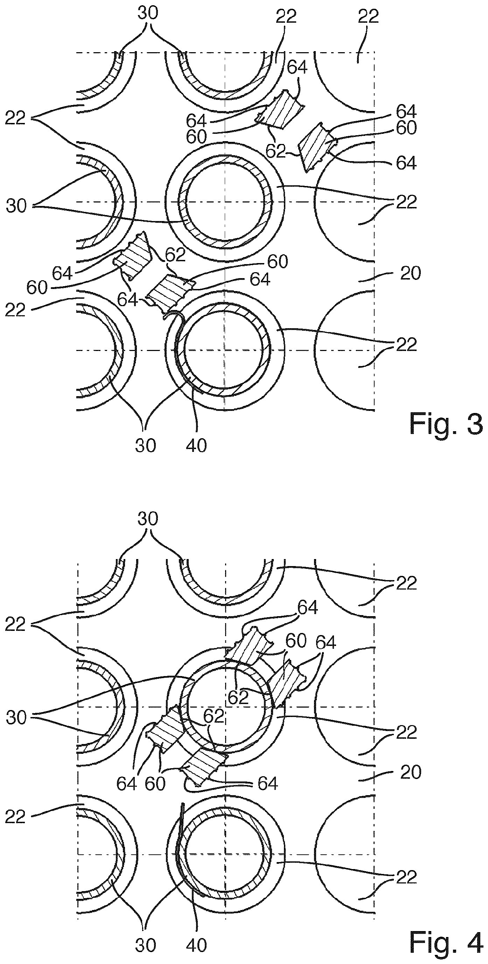

Fig. 3 shows a typical configuration of sample containers 30 and fingers 60 along a plane which is denoted with A-A in fig. 1.

As shown, the rack 20 comprises a plurality of supports 22 that are arranged in a regular pattern. Each support 22 may receive and hold a respective sample container 30. One of the shown sample containers 30 has a label 40 adhered to it.

As is shown in fig. 3, the gripping surfaces 62 face towards a common center in which a sample container 30 to be gripped is located. The non-gripping surfaces 64 face away from the common center.

Fig. 3 shows a state in which the sample container 30 is not gripped. As shown, the label 40 adhered to a neighboring sample container 30 can partially lose contact to the sample container 30 and can thus come into contact with a non-gripping surface 64 of a finger 60.

Due to the corrugation of the non-gripping surface 64, the label 40 will not adhere to the non-gripping surface 64, but will remain on the sample container 30 to which it is adhered to.

Fig. 4 shows a state in which the fingers 60 collectively grip a sample container 30. The label 40 remains on its sample container 30. The fingers 60 can, for example, lift the sample container 30 held by the fingers 60 in order to load it onto a sample container carrier or in an analyzing station.

By means of the shown embodiments, the problem that the label 40 is inadvertently removed from its sample container 30, that has often be seen in prior art configurations, can effectively be omitted.

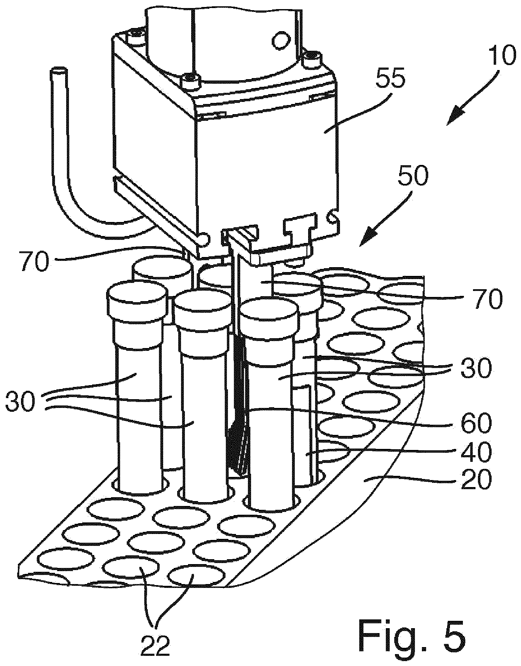

Fig. 5 shows the sample container processing system 10 in a perspective view. As can be seen, the fingers 60 can grip a sample container 30 and can lift it for specific operations.

## Claims

1. Sample container processing system (10), comprising
- a number of racks (20) for holding a plurality of sample containers (30), wherein labels (40) are attached to the sample containers (30), and
- a gripping device (50) for handling sample containers (30), wherein the gripping device (50) comprises:
- a number of rigid fingers (60) being adapted to collectively grip a sample container (30),
- wherein each finger (60) comprises a gripping surface (62) being adapted to contact the sample container (30) while the sample container (30) is gripped by the gripping device (50), and wherein each finger (60) comprises a non-gripping surface (64) being different from the gripping surface (62), and
**characterized in that**
the non-gripping surface (64) of at least one of the fingers (60) is at least partially corrugated by a succession of grooves (66) and serrations (68).

2. Sample container processing system (10) according to claim 1, **characterized in that**
- the gripping device (50) comprises a number of finger supports (70), wherein two fingers (60) are coupled to a corresponding finger support (70).

3. Sample container processing system (10) according to claim 2, **characterized in that**
- the finger supports (70) are movable relative to each other.

4. Sample container processing system (10) according to one of the preceding claims, **characterized in that**
- all gripping surfaces (62) of the fingers (60) face towards a common center.

5. Sample container processing system (10) according to one of the preceding claims, **characterized in that**
- some or all of the gripping surfaces (62) of the fingers (60) are sand blasted.

6. Sample container processing system (10) according to one of the preceding claims, **characterized in that**
- the racks (20) comprise a plurality of supports (22) for the sample containers (30).

7. Sample container processing system (10) according to claim 6, **characterized in that**
- the supports (22) are arranged in a pattern with a distance between respective centers of the supports (22) between 1,5 cm and 2,5 cm.

## Patentansprüche

1. Probenbehälterverarbeitungssystem (10), umfassend
- eine Anzahl von Ständern (20) zum Halten einer Vielzahl von Probenbehältern (30), wobei Etiketten (40) an den Probenbehältern (30) angebracht sind, und
- eine Greifvorrichtung (50) zum Handhaben von Probenbehältern (30), wobei die Greifvorrichtung (50) Folgendes umfasst:
- eine Anzahl von starren Fingern (60), die dafür ausgelegt sind, gemeinsam einen Probenbehälter (30) zu greifen,
- wobei jeder Finger (60) eine Greiffläche (62) umfasst, die dafür ausgelegt ist, den Probenbehälter (30) zu kontaktieren, während der Probenbehälter (30) von der Greifvorrichtung (50) gegriffen wird, und wobei jeder Finger (60) eine Nicht-Greiffläche (64) umfasst, die sich von der Greiffläche (62) unterscheidet, und
**dadurch gekennzeichnet, dass**
die Nicht-Greiffläche (64) von mindestens einem der Finger (60) mindestens teilweise durch eine Abfolge von Nuten (66) und Rippen (68) geriffelt ist.

2. Probenbehälterverarbeitungssystem (10) nach Anspruch 1, **dadurch gekennzeichnet, dass**
- die Greifvorrichtung (50) eine Anzahl von Fingerhalterungen (70) umfasst, wobei zwei Finger (60) an eine entsprechende Fingerhalterung (70) gekoppelt sind.

3. Probenbehälterverarbeitungssystem (10) nach Anspruch 2, **dadurch gekennzeichnet, dass**
- die Fingerhalterungen (70) in Bezug zueinander beweglich sind.

4. Probenbehälterverarbeitungssystem (10) nach einem der vorstehenden Ansprüche, **dadurch gekennzeichnet, dass**
- alle Greifflächen (62) der Finger (60) einem gemeinsamen Zentrum zugewandt sind.

5. Probenbehälterverarbeitungssystem (10) nach einem der vorstehenden Ansprüche, **dadurch gekennzeichnet, dass**
- einige oder alle der Greifflächen (62) der Finger (60) sandgestrahlt sind.

6. Probenbehälterverarbeitungssystem (10) nach einem der vorstehenden Ansprüche, **dadurch gekennzeichnet, dass**
- die Ständer (20) eine Vielzahl von Halterungen (22) für die Probenbehälter (30) umfassen.

7. Probenbehälterverarbeitungssystem (10) nach Anspruch 6, **dadurch gekennzeichnet, dass**
- die Halterungen (22) in einem Muster mit einem Abstand zwischen den jeweiligen Zentren der Halterungen (22) zwischen 1,5 cm und 2,5 cm angeordnet sind.

## Revendications

1. Système de traitement de récipient d'échantillon (10), comprenant
- un certain nombre de portoirs (20) pour contenir une pluralité de récipients d'échantillon (30), dans lequel des étiquettes (40) sont fixées aux récipients d'échantillon (30), et
- un dispositif de préhension (50) pour manipuler les récipients d'échantillon (30), dans lequel le dispositif de préhension (50) comprend :
- un certain nombre de doigts rigides (60) qui sont adaptés pour saisir collectivement un récipient d'échantillon (30),
- dans lequel chaque doigt (60) comprend une surface de préhension (62) qui est adaptée pour entrer en contact avec le récipient d'échantillon (30) pendant que le récipient d'échantillon (30) est saisi par le dispositif de préhension (50), et dans lequel chaque doigt (60) comprend une surface de non préhension (64) qui est différente de la surface de préhension (62), et
**caractérisé en ce que**
la surface de non préhension (64) d'au moins l'un des doigts (60) est au moins partiellement ondulée par une succession de rainures (66) et de dentelures (68).

2. Système de traitement de récipient d'échantillon (10) selon la revendication 1, **caractérisé en ce que**
- le dispositif de préhension (50) comprend un certain nombre de supports de doigts (70), dans lequel deux doigts (60) sont couplés à un support de doigts (70) correspondant.

3. Système de traitement de récipient d'échantillon (10) selon la revendication 2, **caractérisé en ce que**
- les supports de doigts (70) sont mobiles les uns par rapport aux autres.

4. Système de traitement de récipient d'échantillon (10) selon l'une des revendications précédentes, **caractérisé en ce que**
- toutes les surfaces de préhension (62) des doigts (60) font face à un centre commun.

5. Système de traitement de récipient d'échantillon (10) selon l'une des revendications précédentes, **caractérisé en ce que**
- certaines de la totalité des surfaces de préhension (62) des doigts (60) sont décapées au sable.

6. Système de traitement de récipient d'échantillon (10) selon l'une des revendications précédentes, **caractérisé en ce que**
- les portoirs (20) comprennent une pluralité de supports (22) pour les récipients d'échantillon (30).

7. Système de traitement de récipient d'échantillon (10) selon la revendication 6, **caractérisé en ce que**
- les supports (22) sont disposés en un motif avec une distance entre les centres respectifs des supports (22) entre 1,5 cm et 2,5 cm.
